# EUROPEAN PATENT APPLICATION

(11) **EP 1 335 194 A1**
(43) Date of publication of application: **13.08.2003**
(21) Application number: 03008110.3
(22) Date of filing: 27.07.1999
(51) Int. Cl.: G01L 1/22, G01L 1/18, G01L 9/00

(54) **Flexible silicon strain gage**

(30) Priority: 28.07.1998 US 94358 P; 22.10.1998 US 105250 P; 05.02.1999 US 245272
(62) Divisional of application: 99941975.7
(71) Applicant: ROSEMOUNT AEROSPACE INC., Burnsville, MN 55306 (US)
(72) Inventor: Boggs, Bradley J., Mentor, OH 44060-7777 (US); Bang, Christopher A., North Royalton, OH 44133 (US); Just, Marcus S., Brecksville, OH 44141-1240 (US); Stark, Kevin C., Richmond Heights, OH 44143-2546 (US)
(74) Representative: Carstairs, J. C.

(57) **Abstract**

A generally flexible strain gage comprises a strain sensing element, and a generally flexible substrate supporting the strain sensing element. The strain sensing element is made of single crystal or polycrystalline semiconducting material. The invention also includes a method for forming a generally flexible strain gage comprising the step of selecting a wafer having a portion of a base material and portion of a single crystal or polycrystalline semiconducting material located thereon. The method further comprises the steps of etching a strain sensing element out of the semiconducting material and forming a generally flexible substrate onto said sensing element.

## Description

### FIELD OF THE INVENTION

The present invention is directed to the strain gage arts. It finds particular application to a generally flexible strain gage having a semiconducting stain sensing element and will be described with particular reference thereto.

### BACKGROUND OF THE INVENTION

Strain gages are often used to sense strain in a subject material. The strain gage has a strain sensing element that is attached or adhered to the subject material. When the subject material is strained, the resistance of the sensing element changes in proportion to the strain it experiences. The change in resistance in the sensing element as it is compressed or elongated is measured and used to calculate strain in the subject material. Foil strain gages, which have a metal sensing element, are often used to measure strain. However, metal sensing elements have a relatively low gage factor, which reduces the sensitivity of the gage. The use of a semiconductor material, such as doped single crystal silicon or polycrystalline silicon, as the sensing element increases the gage factor of the strain gage dramatically. However, because most semiconductor materials are generally fragile, a semiconducting sensing element is prone to fracture. In order to protect the semiconducting strain sensing element, it is typically mounted upon a rigid backing to provide support (termed a "backed" gage). This rigid backing prohibits use of the gage on curved surfaces. Alternately, an unbacked gage may be used wherein the sensing element is directly adhered to the material. However, unbacked gages are difficult to mount, and the sensing element is exposed and thus still prone to fracture. The unbacked gages are too fragile to mount on curved surfaces. Accordingly, there is a need for a strain gage having a semiconducting strain sensing element, wherein the strain gage has a generally flexible substrate and/or sensing element to provide ease of handling and enable the gage to be used on curved or irregular surfaces.

Many difficulties arise when trying to form a single crystal semiconducting material or polycrystalline material on a flexible substrate, such as polyamide. It is known that amorphous silicon may be adhered to a flexible substrate using glow-discharge decomposition, but this process can not be used with other forms of silicon. Instead, single crystal or polycrystalline silicon must be deposited or grown by different methods, such as epitaxial growth. However, epitaxial growth requires temperatures of around 950° C, and a polyamide substrate decomposes around 550-580° C. Polycrystalline silicon deposition also occurs at temperatures above 500 °C. Thus, epitaxial growth is not feasible for use with polyamide substrates. Furthermore, epitaxial growth can only deposit silicon on an already-existing layer of single crystal silicon, and therefore this process cannot be used to deposit single crystal or polycrystalline silicon on a flexible substrate.

The present invention is also directed to a method of manufacturing a sensor, and more particularly, to a method of manufacturing a generally flexible strain gage. When manufacturing a backed sensor, generally the sensor or sensing element is oriented on the substrate or backing, and the sensor is then fixed to the substrate. This process requires high precision instruments or a trained individual to locate the sensing element in the desired location and orientation. The sensing element is quite difficult to handle due to its brittleness and small size. Accordingly, there is a need for a method of forming a sensor which minimizes or avoids having to handle, locate or attach the sensing element.

### SUMMARY OF THE INVENTION

The present invention is a generally flexible strain gage incorporating a relatively thin semiconducting sensing element mounted to a generally flexible substrate. The strain gage of the present invention has a flexible backing, which makes it easier to mount and enables the gage to be conformed to curved surfaces. The strain sensing element is thin enough to be flexible, and is made from a semiconducting material, such as doped single crystal silicon, which provides a high gage factor relative metal foil, or amorphous silicon as in Uchida Patent No. 4,658,233. In a preferred embodiment, the invention is a generally flexible strain gage comprising a semiconducting single crystal strain sensing element or a semiconducting polycrystalline strain sensing element, and a generally flexible substrate supporting the strain sensing element.

The present invention is also directed to a method for manufacturing a sensor or sensing element mounted on a flexible substrate. In the present method, the sensing element is formed on a wafer, and the flexible substrate is then formed about the sensing element. Once the flexible substrate is cured, the wafer is etched to a precise depth to remove the bulk of the silicon substrate and expose the sensing element. The etch is preferably performed using dry etching techniques, since wet etching can damage sensing elements on the unetched side of the wafer. Furthermore, Reactive Ion Etching (RIE), and preferably Deep Reactive Ion Etching (DRIE) is the dry etch process of choice because it offers high etch rates and high selectivity to etch stop materials.

Because the sensing element is formed directly on the wafer, the sensing element is anchored in the desired location. The substrate can then be formed about the sensing element. In this manner, the sensing element also need not be directly handled or located. In a preferred embodiment, the invention is a method for forming a generally flexible strain gage comprising the step of selecting a wafer having a portion of a base material and portion of a single crystal semiconducting material or polycrystalline semiconducting material located thereon. The method further comprises the steps of etching a strain sensing element out of the semiconducting material and forming a generally flexible substrate onto said sensing element.

Other features and advantages of the present invention will be apparent from the following description, with reference to the accompanying drawings and claims, which form a part of the specification.

### BRIEF DESCRIPTION OF THE DRAWINGS

The invention may take form in various components and arrangements of components, and in various steps and arrangements of steps. The drawings are only for purposes of illustrating a preferred embodiment and are not to be construed as limiting the invention.
Fig. 1 is a top view of one embodiment of the strain gage of the present invention;
Fig. 2 is a top view of an alternate embodiment of the strain gage of the present invention;
Fig. 3 is a cross sectional side view of the strain gage of Fig. 2;
Figs. 4-12 are cross sectional side views showing the steps of the preferred method for forming the strain gage of Fig. 2;
Fig. 13 is a cross sectional side view showing the strain gage of Fig. 12 attached to subject material;
Fig. 14 is a top view of an array of strain gages;
Fig. 15 is a top view of an array of strain gages connected to a processing chip; and
Figs. 16-27 are cross sectional side views showing the steps of a method for forming an alternate embodiment of the strain gage of the present invention.

### DETAILED DESCRIPTION OF THE PREFERRED EMBODIMENTS

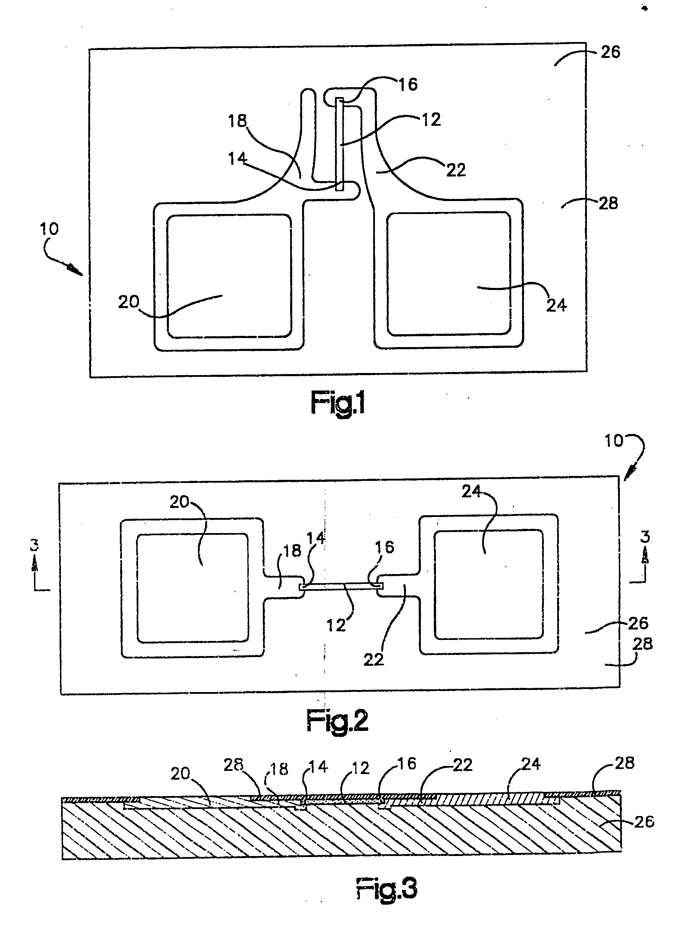

As shown in Fig. 1, the present invention is a strain gage 10 including a strain sensing element 12. The strain sensing element 12 may be any suitable semiconducting material, such as single crystal silicon, doped single crystal silicon, germanium, amorphous silicon, polycrystalline silicon, and the like. However, single crystal semiconducting materials are preferred materials for the sensing element 12. The strain sensing element 12 includes a first end 14 and a second end 16, and the sensing element 12 is preferably thin enough to be generally flexible. The first end 14 is connected to a first electrical lead 18 that couples the first end 14 to the first metal output pad 20. Similarly, the second end 16 is electrically connected to the second output pad 24 by the second lead 22. In a preferred embodiment, each output pad 20, 24 is formed unitarily with its associated lead 18, 22. The output pads 20, 24 and leads 18, 22 may be any electrically conductive material, preferably aluminum, nickel or copper.

An alternate embodiment of the strain gage 10 is shown in Fig. 2 and includes generally the same arrangement of the sensing element, 12, leads 18, 22, output pads 20, 24 and substrate 26. The output pads 20, 24 are on opposing sides of the sensing element 12. In both Fig. 1 and Fig. 2, the sensing element 12, leads 18, 22 and output pads 20, 24 are carried on a generally flexible substrate 26, such as polyamide. An oxide layer 28 is carried on top of the substrate 26, and is located on top of the sensing element 12, leads 18, 22, and substrate 26. In a preferred embodiment the output pads 20, 24 extend upwardly through the oxide layer 28, and the leads 18, 22 and sensing element 12 are "submerged" below the oxide layer 28. Fig. 3 illustrates the oxide layer 28 that is located on top of the sensing element 12, leads 18, 22 and substrate 26.

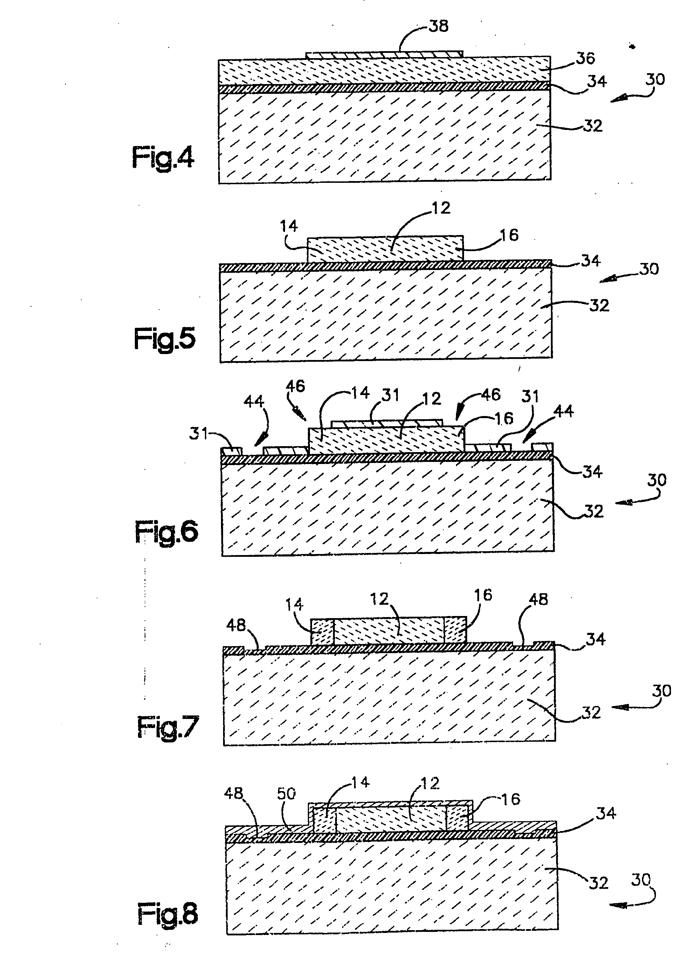

A preferred method for forming the strain gage 10 of the present invention is shown in Figs. 4-12. However, it should be understood that the gage of the present invention may be formed by other, alternate methods. Furthermore, the method described below may be used for manufacturing a wide variety of sensors, and is not limited to the specific type of strain gage sensor described below. For example, the sensors manufactured with the process may include, but are not limited to, heat flux sensors, pressure sensors, accelerometers, temperature sensors, rate sensors, gas sensors, and flow rate sensors.

The process is begun with a wafer 30 which includes a base material 32, oxide layer 34 and doped silicon layer 36 located on top of the oxide 34. The base material 32 is preferably single crystal silicon or polysilicon, and the oxide 34 is preferably silicon dioxide. The base material 32 has a thickness sufficient to lend strength and stiffness to the wafer 30, which facilitates handling the wafer 30. If a flexible sensor is desired, the thickness of the doped silicon layer 36 is less than 20 microns, preferably between about 5 and 20 microns, and further preferably between about 7 and 10 microns. Of course, the thickness can be less than 5 microns if desired, depending on its application. In the described embodiment, the silicon layer 36 will be formed as a strain sensing element, so the silicon layer 36 is doped to the desired sheet resistance, typically ranging from about 10 ohms per square to about 1000 ohms per square and above, depending upon the desired resistance of the gage. These sheet resistances will yield a sensing element having a resistance from about 100 to 10,000 ohms, depending upon the shape and thickness of the sensing element. The silicon layer 36 may be p-type, n-type, or intrinsic.

It should be understood that the doped silicon layer 36 may be replaced with any material from which it is desired to form a sensor. The silicon layer 36 may also be patterned or formed into a sensor other than a strain gage. For example, if a gas sensor is to be formed, the silicon layer 36 is etched to form a comb-finger capacitor. Furthermore, when forming a strain gage, the silicon layer 36 may be replaced with other suitable materials, such as germanium or amorphous silicon, to form a strain gage having a strain sensing element formed from such materials.

Once the wafer 30 is selected, a mask 38 is placed on top of the doped silicon layer 36. The strain sensing element 12 is then formed using standard photolithography and etching which removes the undesired portion of the silicon layer 36, and leaves behind the desired portion of the layer 36 as the strain sensing element 12. (see Fig. 5) If a sensor or sensing element other than a strain gage is to be manufactured, it is formed in place of the strain sensing element 12. This formation of the sensor may involve multiple steps and treatments to the layer 36 beyond those specifically discussed herein. Additionally, multiple layers of materials may be used in place of the single layer 36. The formation of the sensor may also involve the addition of other materials and/or additional dry or wet etching.

Returning to the illustrated example, Fig. 5 shows the wafer 30 after the strain sensing element 12 has been formed. Next, as shown in Fig. 6, a mask pattern 31 is placed on top of the sensing element 12 and the oxide layer 34. A pair of windows 44 are formed on either side of the strain sensing element 12. The windows 44 are cutouts in the mask pattern 31 that leave portions of the oxide layer 34 exposed. A second pair of windows 46 are located on the first end 14 and second end 16 of the strain sensing element 12, and the windows 46 leave the ends 14, 16 exposed. During the next step, the oxide layer 34 is etched through the windows 44. The oxide layer 34 is etched through a portion of its thickness to form indention 48 (Fig. 7). Next, the first end 14 and second end 16 of the sensing element 12 are exposed to a means of doping, such as diffusion or implant, to further dope the ends 14, 16 of the sensing element 12. The additionally doped areas of the sensing element 12 are illustrated with different shading in the accompanying figures. This additional doping of the strain sensing element 12 may be practiced to improve the conductivity between the sensing element 12 and the leads 18, 22, but is not essential to the invention. The additional doping step may be desired if n-type silicon is being used for the strain sensing element 12.

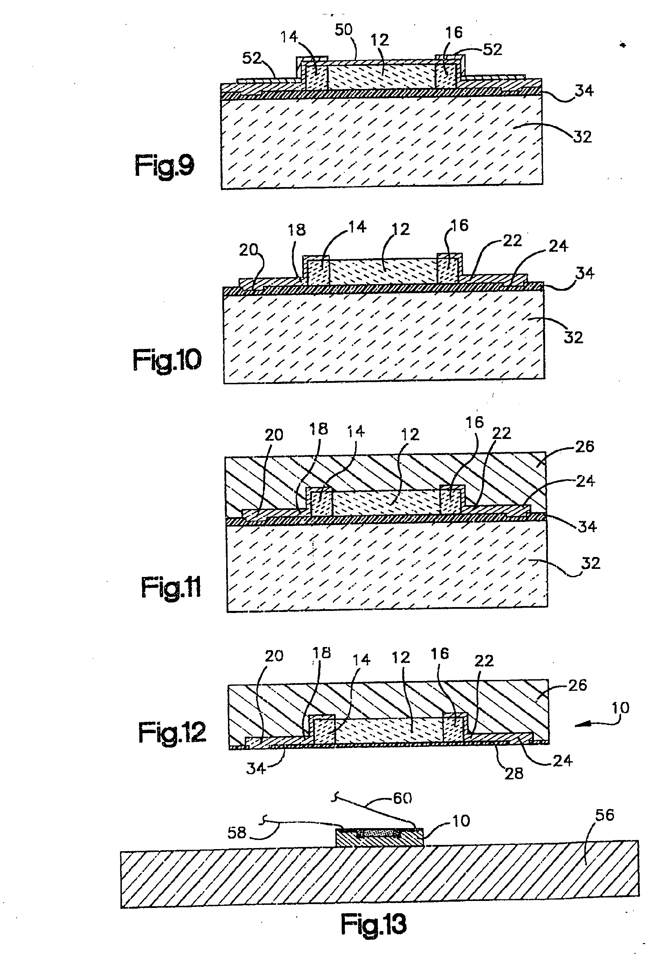

Next, as shown in Fig. 8, a layer of metal 50 is deposited on top of the oxide layer 34 and the sensing element 12, and the metal layer 50 fills in the indentions 48. The metal 50 will eventually form the leads 18, 22 and output pads 20, 24. The metal is preferably aluminum, and is sputtered onto the wafer 30. However, nearly any desired method of forming the leads and connecting pads may be utilized. As shown in Fig. 9, a mask 52 is subsequently located on top of the metal layer 50 to protect those portions of the metal layer 50 which are not to be removed in the next processing step.

As the next step, the areas of the metal layer 50 that are not covered by the mask 52 are removed by etching, leaving behind the output pads 20,24 and the leads 18,22 (Fig. 10). Finally, the generally flexible substrate 26 is spun on the oxide layer 34, pads 20, 24, leads 18, 22 and sensing element 12 (Fig. 11). The flexible substrate 26 is preferably polyamide. Once the polyamide is cured, the base material 32 is removed, and the oxide layer 34 is etched to a sufficient depth until the pads 20, 24 are exposed (Fig. 12). The base material 32 is preferably removed by deep reactive ion etching (DRIE), and the oxide layer 34 is preferably dry etched, exposing the output pads for contacts. Plating can be used to increase metal thickness on the output pads. After it is manufactured, the gage can be mounted to a test specimen 56 with strain gage adhesive, and the output pads 20, 24 provide a surface upon which wires 58, 60 may be bonded or soldered (Fig. 13). The output wires 58, 60 couple the strain gage 10 to an electronic component or components that may calculate the strain measured by the strain gage 10, or further process the output signal. Alternately, the output wires 58, 60 may be connected directly to the ends 14, 16 of the strain sensing element 12, and the leads 18, 22 and output pads 20, 24 may not be formed on the strain gage 10. The output pads merely provide a surface to improve the convenience of electrically connecting the output wires 58, 60 to the ends 14, 16 of the strain sensing element 12.

As can be seen, using the method of the present invention the sensing element 12 is first formed on the wafer 30. After the pads 20, 24 and leads 18, 22 are formed, the substrate 26 is formed about the components of the strain gage 10. Finally, the bulk portion of the wafer 30 is removed, preferably by etching, leaving sensor or strain gage on the substrate 26. In this manner, the strain sensing element 12 need not be handled and/or located on the substrate 26, but the substrate 26 is instead formed about the strain sensing element 12. This enables easier, faster, and more consistent manufacturing of strain gages.

Although the preferred method of forming the strain gage of the present invention has been described, many other methods may be used to fabricate the flexible sensors of the present invention. For example, a semiconducting strain sensing element may be directly placed upon a substrate, instead of forming a substrate about the strain sensing element. The ends of the strain sensing element may then be connected to a pair of output pads or directly connected to the output wires.

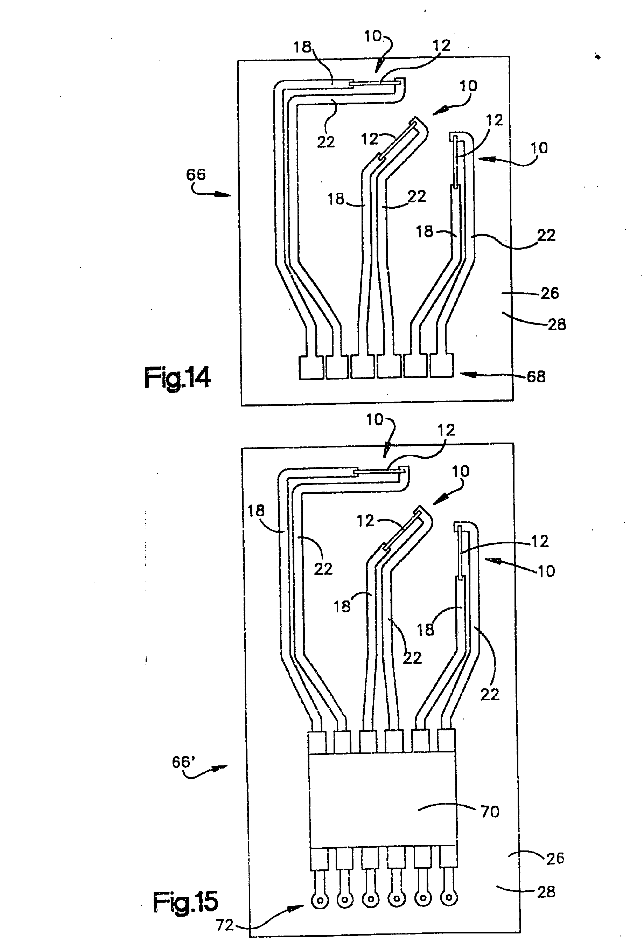

The strain gage of the present invention may be formed on a wafer using batch procedures wherein a plurality of strain gages are formed upon a single sheet of flexible material. After manufacturing the gages, each gage may be trimmed from the other surrounding gages for use. Furthermore, a plurality of strain gages may be formed on a wafer or substrate, and some or all of the gages may be electrically connected to an output area or common component. For example, a strain gage array 66 is shown in Fig. 14. The strain gage array 66 illustrated therein includes a plurality of strain gages 10. The leads 18, 22 of each individual strain gage 10 may be patterned to terminate at a single location 68. In this manner, the ends of all of the leads 18, 22 are collected in a common location 68 for ease of connecting to the output wires. In the alternate embodiment of the strain gage array 66' shown in Fig. 15, the leads 18, 22 are commonly routed to an electronic component 70 on the substrate, such as a data acquisition IC. The component 70 may receive the leads 18, 22, and process the signal provided by the leads 18, 22 of each of the individual strain gages 10. For example, the electronic component 70 may provide amplification, bridge completion, interface electronics, A/D conversion, multiplexing, storage and/or telemetry operation. The electronic component 70 has a plurality of terminals 72 for providing data input/output (I/O), or power to the electronic component. By locating the electronic component 70 on the substrate, the array 66' can perform processing steps, thereby making it much more powerful and adaptable than existing strain arrays. Furthermore, because the electronic component 70 is located close to the sensors 10, the sensor output travels a minimal distance before it is processed. This reduces the loss of signal strength and minimizes exposure to interference.

The sensor arrays 66, 66' may be configured such that they are custom manufactured for use upon a known specimen. For example, the flexible substrate may be sized to fit around the specimen's surface, and the strain gages may be manufactured such that they are located in precise, desired locations that correspond to areas of particular interest to be measured on the specimen when the substrate is fitted onto the specimen. In this manner, when the flexible sheet is mounted to the specimen, the strain gages can measure the strain the specimen experiences at its critical points. Again, the leads of the various strain gages, other sensors and/or electronic component(s) may all run to a single location which is convenient for bonding, or to data acquisition, storage, and/or telemetry circuitry located on the flexible sheet.

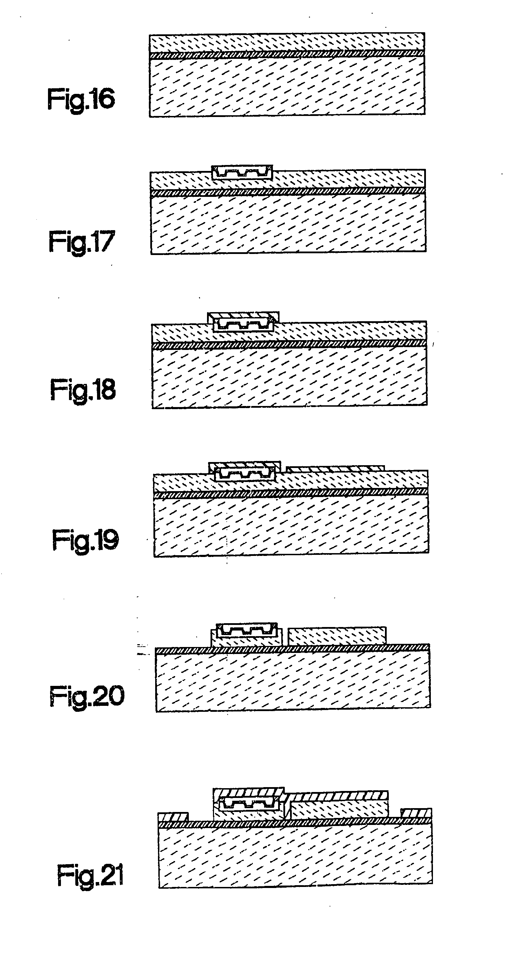

A method for forming a sensor having microelectronic circuitry monolithically integrated thereon is shown in Figs. 16-27. Although only a single microelectronic component and a single sensor are shown, a plurality of these components and sensors may be incorporated into the finished product. The method described below and shown in Figs. 16-27 is generally the same as the method described above in conjunction with Figs. 4-12, with the primary difference being the addition of microelectronic circuitry into the finished product. As shown in Fig. 16, the process begins with a wafer 30 having a silicon layer 35. The wafer 30 includes an oxide layer 34 and base material 32. Next, as shown in Fig. 17, microelectronic circuitry 74 is fabricated into the wafer 30 by conventional methods. Alternately, a wafer 30 having microelectronic circuitry 74 already formed therein may be purchased from a vendor. The microelectronic circuitry 74 is preferably fabricated using any of a variety of technologies, including complimentary metal oxide semiconductor (CMOS), other metal oxide semiconductor technologies such as DMOS, UMOS, VMOS, LDMOS and the like, bipolar processes, hybrid technologies such as BiCMOS, or other technologies. The microelectronic circuitry 74 typically processes, conditions, or otherwise treats the output from the sensor and/or performs other functions required by the end user's system.

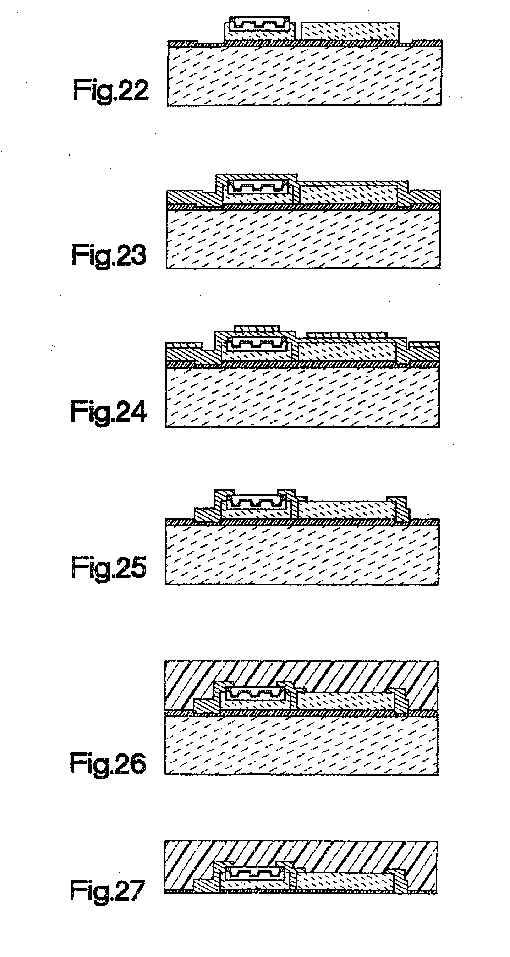

As shown in Fig. 18, the microelectronic circuitry 74 is next protected by a mask 76, and the exposed silicon 35 is doped. Alternately, the step shown in Fig. 18 may be omitted, and the layer 35 may be doped before the circuitry 74 is fabricated in silicon layer 35. Next, a mask 78 is located over the circuitry 74 and part of the layer 35 (Fig. 19). The exposed silicon layer 35 is then selectively removed, leaving behind the sensing element 12 shown in Fig. 20. A mask 80 is
then placed over the circuitry 74, sensing element 12 and part of the oxide layer 34 (Fig. 21). The exposed portion of the oxide layer 34 is then etched through part of its thickness to form indentations 48 (Fig. 22).

A layer of metal or other conductive material 82 is then deposited over the entire assembly (Fig. 23), and another mask 84 is located over the metal layer 82 (Fig. 24). The exposed portions of the metal layer 82 are removed, leaving behind the pads 86, 88, as well as leads 90, 92, 94 (Fig. 25). Alternately, a "lift-off" technique, as know to those skilled in the art, may be employed to pattern the metal layer 82. Finally, the flexible layer 26 is spun on the entire assembly (Fig. 26) and the base material 32 is removed, resulting in the structure shown in Fig. 27. The resultant assembly 96 is a strain gage and microelectronic circuitry mounted on a flexible substrate. The assembly can be mounted to non-flat components, and the microelectronic circuitry 74 provides processing capability to the assembly 96. Of course, other sensors besides strain gages may be formed using the above-described method.

The preferred form of the invention has been described above. However, with the present disclosure in mind it is believed that obvious alterations to the preferred embodiments, to achieve comparable features and advantages, will become apparent to those of ordinary skill in the art.

## Claims

1. A flexible strain gage comprising:
a strain sensing element having a least one property that varies with an applied strain, said strain sensing element having a thickness of less than about 20 microns; and
a generally flexible substrate supporting said strain sensing element.

2. The strain gage of Claim 1 wherein said strain sensing element is generally flexible.

3. The strain gage of Claim 1 wherein said strain sensing element is a semiconductor.

4. The strain gage of Claim 1 wherein said strain sensing element is doped silicon.

5. The strain gage of Claim 1 wherein said strain sensing element has a resistance between about 100 ohms and about 10,000 ohms.

6. The strain gage of Claim 1 wherein said strain sensing element has a sheet resistance between about 10 ohm/square and about 1,000 ohm/square.

7. The strain gage of Claim 1 wherein said substrate is a polymer.

8. The strain gage of Claim 1 wherein said substrate is polyamide.

9. The strain gage of Claim 1 further comprising an oxide layer covering said strain sensing element.

10. The strain gage of Claim 1 further comprising an electronic component electrically connected to said strain sensing element, said electronic component being carried on said substrate.

11. The strain gage of Claim 1 wherein said substrate has a first side and a second side, and wherein said gage includes at least one output pad electrically coupled to said strain sensing element, said output pad being located on or adjacent to said first side such that said output pad can be accessed from said first side.

12. The strain gage of Claim 1 wherein said strain sensing element has a radius of curvature of equal to or less than about 6mm.

13. The strain gage of Claim 1 wherein said strain sensing element is generally fully embedded in said substrate.

14. A flexible strain gage comprising:
a flexible substrate having a first side and an opposed second side;
a flexible semiconductor strain sensing element located on or adjacent to said first side, said strain sensing element having at least one property that varies with an applied strain; and
at least one output pad electrically coupled to said strain sensing element, said output pad being located on or adjacent to said first side such that said output pad can be accessed from said first side.

15. The strain gage of claim 14 wherein said strain sensing element has a radius of curvature of equal to or less than about 6mm.

16. The strain gage of Claim 14 further comprising a lead electrically coupling said strain sensing element and said output pad, said lead being at least partially embedded in said substrate.

17. The strain gage of Claim 14 wherein said first side and said second side extend generally parallel to said strain sensing element.

18. The strain gage of Claim 14 further comprising an auxiliary output pad electrically coupled to said strain sensing element, said auxiliary output pad being located on or adjacent to said first side such that said auxiliary output pad can be accessed from said first side.

19. The strain gage of Claim 14, wherein said strain sensing element has a thickness of less than about 20 microns.

20. The strain gage of Claim 14 wherein said strain sensing element is silicon and said substrate is a polymer.

21. The strain gage of Claim 14 further comprising an oxide layer covering said strain sensing element.

22. The strain gage of Claim 14 wherein said strain sensing element is generally fully embedded in said substrate.

23. A generally flexible strain gage comprising:
a strain sensing element having at least one property that varies with an applied strain; and
a generally flexible substrate receiving said strain sensing element therein such that said strain sensing element is generally fully embedded in said substrate.

24. The strain gage of Claim 23 wherein said strain sensing element is flexible.

25. The strain gage of Claim 23 wherein said strain sensing element has a radius of curvature equal to or less than about 6mm.

26. The strain gage of Claim 23 wherein said strain sensing element has a thickness of less than about 20 microns.

27. The strain gage of Claim 23 further comprising at least one output pad and at least one lead electrically connecting said output pad and said strain sensing element, and wherein at least part of said lead is fully embedded in said substrate and spaced apart from an upper surface of said substrate.

28. The strain gage of Claim 27 wherein said part of said lead that is spaced apart from said upper surface includes a portion of said lead located adjacent to said strain sensing element and extending generally away from an upper surface of said substrate.
